# EUROPEAN PATENT SPECIFICATION

(11) **EP 3 525 505 B1**
(45) Date of publication and mention of the grant of the patent: **17.11.2021**
(21) Application number: 17857790.4
(22) Date of filing: 25.07.2017
(51) Int. Cl.: H04W 16/14, H04W 24/02, H04W 64/00

(54) **METHOD AND DEVICE FOR POSITIONING INTERFERENCE SOURCE CELL AND CORRESPONDING BASE STATION**
VERFAHREN UND VORRICHTUNG ZUR POSITIONIERUNG EINER STÖRQUELLENZELLE UND ENTSPRECHENDE BASISSTATION
PROCÉDÉ ET DISPOSITIF DE POSITIONNEMENT D'UNE CELLULE DE SOURCE D'INTERFÉRENCE ET STATION DE BASE CORRESPONDANTE

(30) Priority: 08.10.2016 CN 201610881893
(43) Date of publication of application: 14.08.2019
(73) Proprietor: ZTE Corporation, Shenzhen, Guangdong 518057 (CN)
(72) Inventor: CHEN, Haihong, Shenzhen Guangdong 518057 (CN); WANG, Wenfang, Shenzhen Guangdong 518057 (CN); QIN, Hongfeng, Shenzhen Guangdong 518057 (CN)
(74) Representative: Brunazzi, Stefano
(86) International application number: PCT/CN2017/094268
(87) International publication number: WO 2018/064909

(56) References cited:
- EP-A1- 1 610 514
- CA-A1- 2 945 854
- CN-A- 102 573 044
- CN-A- 103 517 281
- CN-A- 103 796 219
- CN-A- 103 796 219
- CN-A- 104 602 269

## Description

### TECHNICAL FIELD

The present disclosure relates to the field of communication technologies, and more particularly, to a method and a device for positioning an interference source cell and a corresponding base station.

### BACKGROUND

For the Time Division Long Term Evolution (TD-LTE) system, the base station is required to maintain strict time synchronization, and GPS synchronization is generally used to ensure timing synchronization between base stations. Due to arranging network by means of co-frequency coverage, there is a mutual interference between adjacent cells. Moreover, due to sharing frequency of the uplink and downlink transmission in the TD-LTE system, in addition to the traditional inter-cell interference in the TD-LTE system, there is also a situation in which the downlink signal of the remote base station interferes with the uplink signal of the target cell.

Due to the propagation characteristics of electromagnetic waves, in some scenarios (such as good airborne environment and atmospheric waveguide effect), long-distance co-frequency interference of TD-LTE systems may occur between base stations located far apart (tens of kilometers or even hundreds of kilometers). After the downlink signal of the remote transmitting source reaches the proximal co-frequency target base station after the propagation delay, it may enter other transmission time slots of the target base station, so that the normal operation of the proximal target system is affected, and the interference may be the effect of superposition and accumulation of multi-base station.

In practical applications, it may be considered to transmit a specific custom pilot sequence in a certain time slot of a cell that performs interference, and then detect the pilot sequence on the side of interfered cell. Since the pilot sequence and the cell performing interference have a one-to-one correspondence in a certain way, the interfered cell could learn that which remote cell interferes with it.

However, since each cell in the actual system has different bandwidths, if the above prior art solution is adopted, the target cell may have to traverse all possible bandwidth combinations to learn that which cell is performing interference. In addition, for different target cells, the traversal detection required to be done may be different. The process of positioning the interference source cell in the entire system could be quite complicated.

This section provides background information related to the present disclosure which is not necessarily prior art.

Document EP1610514A1 discloses a method for providing a pilot symbol for base station identification in a Multiple-Input Multiple-Output (MIMO) communication system having one or more transmission antennas, wherein the pilot symbol is comprised of a first sequence having a good cell identification characteristic and a second sequence for reducing a peak-to-average power ratio (PAPR) for all of pilot symbols.

Document CA2945854A1 discloses a method for generating a preamble symbol, a method for receiving a preamble symbol, a related method for generating a frequency domain symbol, and apparatuses thereof. The methods are characterized by comprising: generating a prefix according to an extracted part of a time domain main signal; generating a super-prefix according to the whole or a part of the part of the time domain main signal; and generating time domain symbols according to at least one of a cyclic prefix, the time domain main signal, and the super-prefix, the preamble symbol comprising at least one of the time domain symbols.

Document CN103796219A discloses to a long distance cofrequency interference source detection and positioning method for a TD-LTE system. According to the detection method, a main synchronization signal of detected interference signals is compared with a main synchronization signal of local district signals in time domains, if time difference surpasses the threshold, the interference signals are a long distance cofrequency interference source; according to the positioning method, physical-level district ID parameters contained in the a secondary synchronization signal and in the main synchronization signal in the interference signals are utilized to acquire the signal district ID, and a position of the interference district is determined according to a signal district ID configuration table.

### SUMMARY

The embodiments of the present disclosure provide a method and a device for positioning an interference source cell and a corresponding base station as defined in the appended claims, so as to solve the problem of how to position the interference source cell simply and efficiently in the TD-LTE system.

Aspects of the present disclosure provide a method for positioning an interference source cell, the method includes: receiving specific data generated based on a pilot sequence and transmitted by other cells; parsing the specific data to produce corresponding frequency-domain data of each other cell at an aliasing bandwidth; generating corresponding frequency-domain data locally according to all possible special pilot sequences in a system; generating corresponding time-domain data according to the locally generated frequency-domain data and the parsed frequency-domain data; and determining an interference source cell according to the time-domain data produced.

In an aspect, prior to the receiving specific data generated based on a pilot sequence and transmitted by other cells, the method further includes: generating time-domain data according to the pilot sequence of each cell; and adding a cyclic prefix CP to the time-domain data generated for each cell to generate the specific data, and transmitting the specific data.

In an aspect, prior to the generating time-domain data according to the pilot sequence of each cell, the method further includes: setting an aliasing bandwidth B_{Inv} of the entire system; and taking the aliasing bandwidth B_{Inv} as a basic unit, and setting the pilot sequence of each cell in the system.

In an aspect, when there is a plurality of aliasing bandwidths in the system, the aliasing bandwidth having a minimum bandwidth is selected as the aliasing bandwidth B_{Inv} of the entire system.

In an aspect, the generating time-domain data according to the pilot sequence of each cell specifically includes: interpolating a value of 0 before, or after, or both before and after the pilot sequence to generate a sequence of length N_{subcarrier}, wherein the N_{subcarrier} is number of subcarriers included in the aliasing bandwidth Bᵢₙᵥ; performing a positive and negative frequency exchange on the sequence of length N_{subcarrier} and interpolating a value of 0 in middle to generate N_{FFT}-point frequency-domain data; and performing an inverse fast Fourier transform IFFT operation on the N_{FFT}-point frequency-domain data to generate N_{FFT}-point time-domain data.

In an aspect, when bandwidth of one cell is 2^{n ∗} B_{Inv}, 2ⁿ pilot sequences are set, 2ⁿ N_{FFT}-point time-domain data are generated correspondingly, and then the generated 2ⁿ N_{FFT}-point time-domain data are merged, and then N_{cp}-point CP are added to the merged data, wherein the n is a non-negative integer.

In an aspect, the specific data is (N_{cp} + 2^{n ∗} N_{FFT})-point data, the parsing the specific data to produce corresponding frequency-domain data of each other cell at an aliasing bandwidth specifically includes: removing the N_{cp}-point CP from the specific data; obtaining the corresponding N_{FFT}-point time-domain data at the aliasing bandwidth; and performing a fast Fourier transform FFT operation on the N_{FFT}-point time-domain data to produce N_{FFT}-point frequency-domain data Yᵢₙᵥ.

In an aspect, the generating corresponding time-domain data according to the locally generated frequency-domain data and the parsed frequency-domain data includes: performing conjugate point multiplication on the locally generated frequency-domain data and the parsed frequency-domain data to produce R; and performing IFFT operation on the R to produce N_{FFT}-point time-domain data Rₜ.

In an aspect, the determining an interference source cell according to the time-domain data produced specifically includes: performing a peak search on the time-domain data Rₜ corresponding to each other cell, and if the Rₜ has an apparent peak, the corresponding other cell is the interference source cell.

Aspects of the present disclosure provide a device for positioning an interference source cell, the device includes: a receiving module, configured to receive specific data generated based on a pilot sequence and transmitted by other cells; a parsing module, configured to parse the specific data to produce corresponding frequency-domain data of each other cell at an aliasing bandwidth; a generation module, configured to generate corresponding frequency-domain data locally according to all possible special pilot sequences in a system, and generate corresponding time-domain data according to the locally generated frequency-domain data and the parsed frequency-domain data; and a determination module, configured to determine an interference source cell according to the time-domain data produced. In an aspect, the generation module is further configured to generate time-domain data according to the pilot sequence of each cell, and add a cyclic prefix CP to the time-domain data generated for each cell to generate the specific data; and the device further includes a transmitting module, configured to transmit the generated specific data to other cell.

In an aspect, the device further includes a setting module, configured to set an aliasing bandwidth B_{Inv} of the entire system, and take the aliasing bandwidth B_{Inv} as a basic unit, and set the pilot sequence of each cell in the system.

In an aspect, the generating time-domain data by the generation module according to the pilot sequence of each cell specifically includes: interpolating a value of 0 before, or after, or both before and after the pilot sequence to generate a sequence of length N_{subcarrier}, wherein the N_{subcarrier} is number of subcarriers included in the aliasing bandwidth Bᵢₙᵥ; performing a positive and negative frequency exchange on the sequence of length N_{subcarrier} and interpolating a value of 0 in middle to generate N_{FFT}-point frequency-domain data; and performing an inverse fast Fourier transform IFFT operation on the N_{FFT}-point frequency-domain data to generate N_{FFT}-point time-domain data.

In an aspect, the generating corresponding time-domain data by the generation module according to the locally generated frequency-domain data and the parsed frequency-domain data includes: performing a conjugate point multiplication on the locally generated frequency-domain data and the parsed frequency-domain data to produce R; and performing an IFFT operation on the R to produce N_{FFT}-point time-domain data Rₜ.

Aspects of the present disclosure provide a base station, including a baseband processing unit, the baseband processing unit is configured to perform the following operations: receiving specific data generated based on a pilot sequence and transmitted by other cells; parsing the specific data to produce corresponding frequency-domain data of each other cell at an aliasing bandwidth; generating corresponding frequency-domain data locally according to all possible special pilot sequences in a system; generating corresponding time-domain data according to the locally generated frequency-domain data and the parsed frequency-domain data; and determining an interference source cell according to the time-domain data produced.

In an aspect, the baseband processing unit is further configured to: generate time-domain data according to the pilot sequence of each cell; and add a cyclic prefix CP to the time-domain data generated for each cell to generate the specific data, and transmit the specific data.

In an aspect, the baseband processing unit is further configured to: set an aliasing bandwidth B_{Inv} of the entire system; and take the aliasing bandwidth B_{Inv} as a basic unit, and set the pilot sequence of each cell in the system.

A method and a device for positioning an interference source cell and a corresponding base station as defined in the appended claims are provided by the embodiment of the present disclosure, when there are a plurality of different bandwidth aliased in the system, traversal detection of various bandwidth combinations is not required, and relevant possible sequences is only required to be detected at the aliasing bandwidth to complete detection and position of the interference source cell, so that the complexity of positioning an interference source cell is reduced, the process of detection and position is simple and efficient.

This section provides a summary of various implementations or examples of the technology described in the disclosure, and is not a comprehensive disclosure of the full scope or all features of the disclosed technology.

### BRIEF DESCRIPTION OF THE DRAWINGS

The accompanying drawings described herein are intended for providing further understanding of the present disclosure, and constituting a part of the present disclosure. The exemplary embodiments of the present disclosure and description thereof are intended for explaining the present disclosure, but not for constituting an improper limitation on the present disclosure. In the drawings:
FIG. 1 is a flowchart of a preferred embodiment of a method for positioning an interference source cell according to the present disclosure;
FIG. 2 is a schematic diagram of bandwidth of each cell in an embodiment of a TD-LTE system according to the present disclosure;
FIG. 3 is a flow chart of a preferred embodiment of a process for generating specific data by a first interfering cell and a second interfering cell in FIG. 2;
FIG. 4 is a flow chart of a preferred embodiment of a process for generating specific data by a third interfering cell in FIG. 2;
FIG. 5 is a flow chart of a preferred embodiment of a process for a target cell in FIG. 2 to position an interferer cell;
FIG. 6 is a schematic block diagram of a preferred embodiment of a device for positioning an interference source cell according to the present disclosure;

The implementation, functional features, and advantages of the present disclosure will be further described in combination with the embodiments.

### DETAILED DESCRIPTION

In order to make technical problems to be solved by the present disclosure, technical schemes and beneficial effects more clear and obvious, the present disclosure will be further described in detail below with reference to the accompanying drawings and embodiments.

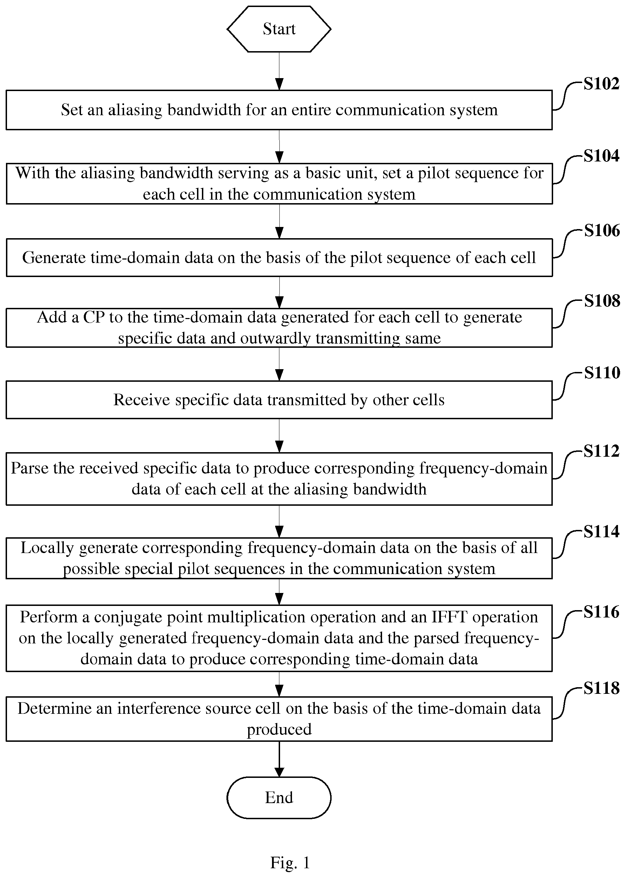

As shown in FIG. 1, an embodiment of the present disclosure provides a method for positioning an interference source cell, which is used in a base station of a TD-LTE system, and is used to accurately position the interference source cell when a target cell (interfered cell) is interfered by a signal of a remote cell. The method includes the following steps S102-S118.

In step S102, an aliasing bandwidth B_{Inv} of the entire system is set.

Specifically, the communication system is a TD-LTE system. If there are multiple bandwidth combinations in each cell of the entire communication system, there are overlapped portion of bandwidths between them, and each overlapped portion is an aliasing bandwidth B_{Inv_x}.

The aliasing bandwidth is B_{Inv_x}= (2)^{-N ∗} B_{cell_n}, wherein, B_{cell_n} is the total cell bandwidth of the communication system. In the same communication system, the aliasing bandwidth could be one or more blocks. When there are multiple aliasing bandwidths B_{Inv_x}, the one having the minimum bandwidth is selected as the aliasing bandwidth B_{Inv} of the entire communication system. The aliasing bandwidth includes N_{subcarrier} subcarriers.

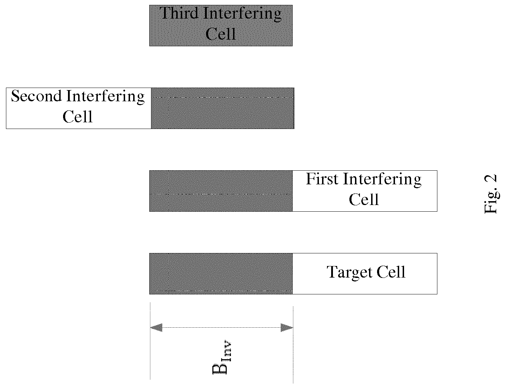

For example, referring to FIG. 2, the communication system in the figure is composed of cells of 20M and 10M bandwidth, and the target cell is interfered by three cells. Wherein, the bandwidth of the target cell is 20M, the bandwidth of the first interfering cell is 20M, the bandwidth of the second interfering cell is 20M, the bandwidth of the third interfering cell is 10M, and the aliasing bandwidth of the communication system is 10M.

In step S104, the aliasing bandwidth B_{Inv} is taken as a basic unit, and the pilot sequence of each cell in the system is set.

Specifically, the bandwidth of each cell in the communication system is divided into a plurality of parts by using the aliasing bandwidth B_{Inv} as a basic unit, and a pilot sequence is generated for the frequency-domain data corresponding to each part. The pilot sequence may be an m sequence, a gold sequence, a ZC sequence, or other sequences with good autocorrelation and poor cross-correlation. The length of the pilot sequence is less than N_{subcarrier}, denoted as N_{subcarrier}.

For example, if the bandwidth of the first interfering cell (or the second interfering cell) in FIG. 2 is equal to two aliasing bandwidths B_{Inv}, then the first interfering cell (or the second interfering cell) is required to set two pilot sequences N_{sequence}.

In step S106, time-domain data is generated according to the pilot sequence of each cell. In this embodiment, a value of 0 is interpolated before, or after, or both before and after the pilot sequence N_{Sequence} to generate a sequence of length N_{subcarrier}, positive and negative frequency exchange is performed on the sequence of length N_{subcarrier} and a value of 0 is interpolated in middle to generate N_{FFT}-point frequency-domain data, IFFT (Inverse Fast Fourier Transform) operation is performed on the N_{FFT}-point frequency-domain data to generate N_{FFT}-point time-domain data.

In step S108, a cyclic prefix CP is added to the time-domain data generated for each cell to generate the specific data, and the specific data is transmitted.

Specifically, when a bandwidth of a cell is 2^{n ∗} B_{Inv} (n=0,1,2,3...), 2ⁿ pilot sequences are set, 2ⁿ N_{FFT}-point time-domain data are generated correspondingly, and then the generated 2ⁿ N_{FFT}-point time-domain data are merged, and then N_{cp}-point CP are added to the merged data, wherein when n=0, the bandwidth of the cell is the aliasing bandwidth B_{Inv}, a pilot sequence N_{Sequence} is set, N_{FFT}-point time-domain data are generated correspondingly, and then N_{cp}-point CP are added to the generated N_{FFT}-point time-domain data directly.

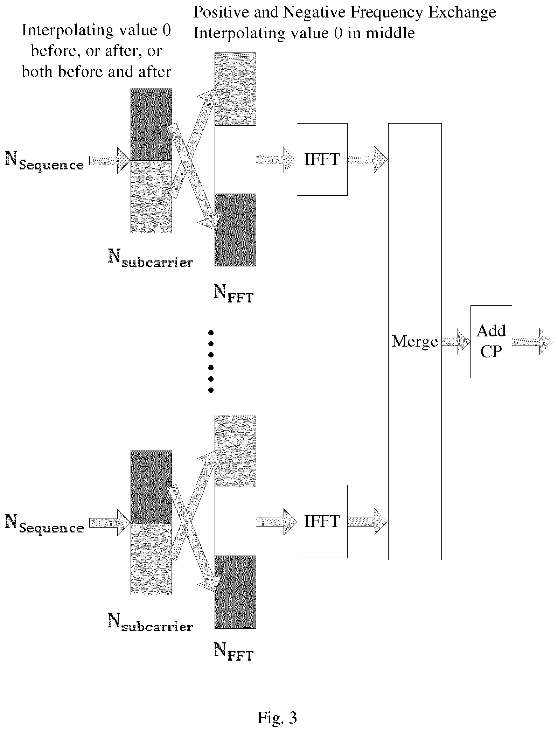

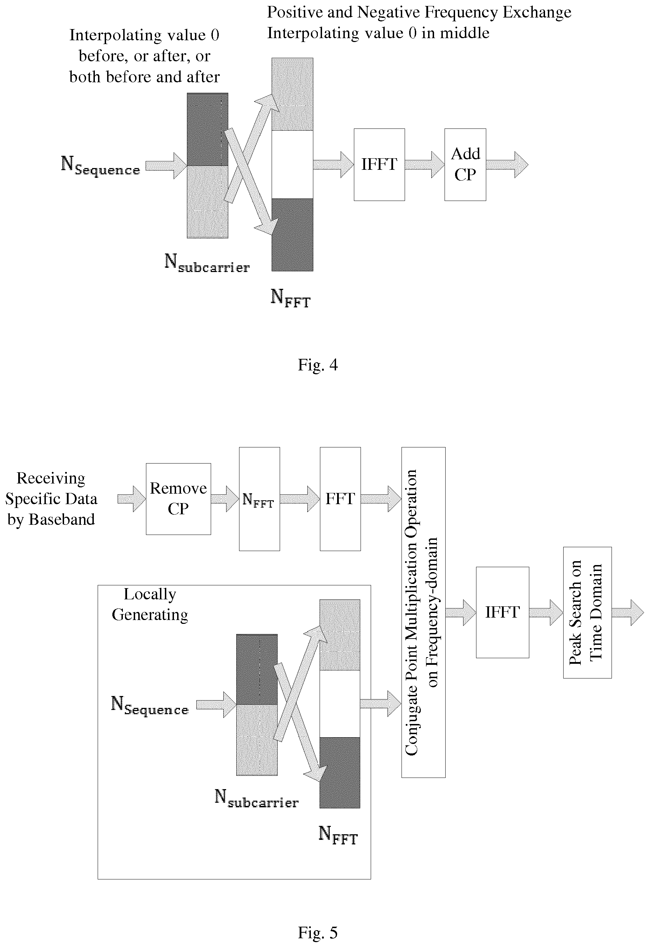

For example, referring to FIG. 3 and FIG. 4, it is a flow chart corresponding to a process (i.e., above steps S104-S108) for generating the specific data by a first interfering cell (or a second interfering cell) and a third interfering cell in FIG. 2.

It should be noted that, how to generate time-domain data from the corresponding frequency-domain data at each aliasing bandwidth B_{Inv} may have multiple ways. Only one of them is provided in this embodiment. Other ways that could be considered by those skilled in the art are equally applicable to the present disclosure.

Further, when the target cell is interfered, the following steps could be performed to position the interference source cell.

In step S110, the specific data transmitted by other cell is received.

Specifically, the target cell receives the specific data transmitted by each of the other cells, the specific data is (N_{cp} + 2^{n ∗} N_{FFT})-point data.

In step S112, the received specific data is parsed to produce corresponding frequency-domain data of each other cell at the aliasing bandwidth.

Specifically, for the specific data transmitted by each of the other cells, the N_{cp}-point CP are removed from the specific data, the corresponding N_{FFT}-point time-domain data at the aliasing bandwidth is obtained. FFT (Fast Fourier Transform) operation is performed on the N_{FFT}-point time-domain data to produce N_{FFT}-point frequency-domain data Yᵢₙᵥ.

In step 114, the corresponding frequency-domain data is generated locally according to all possible special pilot sequences in a communication system.

Specifically, the target cell locally generates the frequency-domain data S in the same way as the above step S106 according to all possible special pilot sequences of length N_{Sequence} in the communication system.

In step S116, a conjugate point multiplication operation and an IFFT operation are performed on the locally generated frequency-domain data and the parsed frequency-domain data to produce corresponding time-domain data.

Specifically, the target cell performs the conjugate point multiplication operation on the locally generated frequency-domain data S and the parsed frequency-domain data Yᵢₙᵥ to produce R, i.e., R=S^{∗}.∗Yᵢₙᵥ. Then N_{FFT}-point IFFT operation is performed on the R to produce N_{FFT}-point time-domain data Rₜ. For each of the other cells, a corresponding time-domain data Rₜ is obtained.

In step S118, an interference source cell is determined according to the time-domain data produced.

Specifically, the peak search is performed on the time-domain data Rₜ corresponding to each other cell. If the local pilot sequence and the pilot sequence of the transmitting end (other cell) are the same, then the Rₜ has an apparent peak, it is indicated that the other cell is an interference source cell, and the receiving end (the target cell) could determine the information of the interference source cell with this.

For example, referring to FIG. 5, it is a flow chart corresponding to a process (i.e., above steps S110-S118) for a target cell in FIG. 2 to position an interferer cell.

In the method for positioning an interference source cell, a cell performing the interference transmits specific data generated based on a specific pilot sequence in a specific time domain and frequency domain resource, the target cell detects the specific data in a specific time domain and frequency domain resource, the specific data transmitted by each cell is known to all other cells in the communication system. When there are a plurality of different bandwidth aliased in the communication system, traversal detection of various bandwidth combinations is not required, and relevant possible sequences is only required to be detected at the aliasing bandwidth to complete detection and position of the interference source cell, the method reduce complexity of positioning an interference source cell, the process of detection and position is simple and efficient.

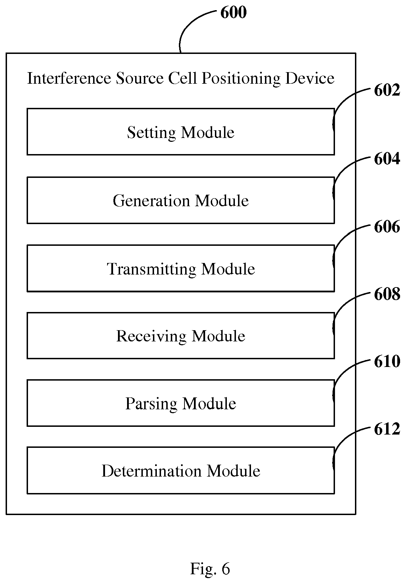

As shown in FIG. 6, one embodiment of the present disclosure provide a device 600 for positioning an interference source cell, which is applied to a baseband processing unit of a base station in the TD-LTE system, and used to accurately position the interference source cell when the target cell is interfered by the signal of the remote cell.

In this embodiment, the device 600 for positioning an interference source cell includes a setting module 602, a generation module 604, a transmitting module 606, a receiving module 608, a parsing module 610, and a determination module 612.

The setting module 602 is configured to set an aliasing bandwidth of the entire system.

Specifically, the communication system is a TD-LTE system. If there are multiple bandwidth combinations in each cell of the entire communication system, there are overlapped portion of bandwidths between them, and each overlapped portion is an aliasing bandwidth B_{Inv_x}.

The aliasing bandwidth is B_{inv_x}= (2)^{-N ∗} B_{cell_n}, wherein, B_{cell_n} is the total cell bandwidth of the communication system. In the same communication system, the aliasing bandwidth could be one or more blocks. When there are multiple aliasing bandwidths B_{Inv_x}, the one having the minimum bandwidth is selected as the aliasing bandwidth B_{Inv} of the entire communication system. The aliasing bandwidth includes N_{subcarrier} subcarriers.

The setting module 602 is configured to take the aliasing bandwidth as a basic unit, and set the pilot sequence of each cell in the system.

Specifically, the bandwidth of each cell in the communication system is divided into a plurality of parts by using the aliasing bandwidth B_{Inv} as a basic unit, and a pilot sequence is generated for the frequency-domain data corresponding to each part. The pilot sequence may be an m sequence, a gold sequence, a ZC sequence, or other sequences with good autocorrelation and poor cross-correlation. The length of the pilot sequence is less than N_{subcarrier}, denoted as N_{subcarrier}.

The generation module 604 is configured to generate time-domain data according to the pilot sequence of each cell.

In this embodiment, a value of 0 is interpolated before, or after, or both before and after the pilot sequence N_{Sequence} to generate a sequence of length N_{subcarrier}, positive and negative frequency exchange is performed on the sequence of length N_{subcarrier} and a value of 0 is interpolated in middle to generate N_{FFT}-point frequency-domain data, IFFT (Inverse Fast Fourier Transform) operation is performed on the N_{FFT}-point frequency-domain data to generate N_{FFT}-point time-domain data.

The generation module 604 is further configured to add a CP (cyclic prefix) to the time-domain data generated for each cell to generate the specific data.

Specifically, when a bandwidth of a cell is 2^{n ∗} B_{Inv} (n=0,1,2,3...), 2ⁿ pilot sequences are set, 2ⁿ N_{FFT}-point time-domain data are generated correspondingly, and then the generated 2ⁿ N_{FFT}-point time-domain data are merged, and then N_{cp}-point CP are added to the merged data, wherein when n=0, the bandwidth of the cell is the aliasing bandwidth B_{Inv}, pilot sequence N_{Sequence} is set, N_{FFT}-point time-domain data are generated correspondingly, and then N_{cp}-point CP are added to the generated N_{FFT}-point time-domain data directly.

The transmitting module 606 is configured to transmit the generated specific data to other cell.

The receiving module 608 is configured to receive specific data generated transmitted by other cells.

Specifically, the target cell receives the specific data transmitted by each other cell, the specific data is (N_{cp} + 2^{n ∗} N_{FFT})-point data.

The parsing module 610 is configured to parse the specific data to produce corresponding frequency-domain data of each other cell at an aliasing bandwidth.

Specifically, for the specific data transmitted by ach of the other cells, the N_{cp}-point CP are removed from the specific data, the corresponding N_{FFT}-point time-domain data at the aliasing bandwidth is obtained. FFT (Fast Fourier Transform) operation is performed on the N_{FFT}-point time-domain data to produce N_{FFT}-point frequency-domain data Yᵢₙᵥ.

The generation module 604 is configured to generate corresponding frequency-domain data locally according to all possible special pilot sequences in the communication system.

Specifically, the target cell locally generates the frequency-domain data S in the same way as the transmitting end according to all possible special pilot sequences of length N_{Sequence} in the communication system.

The generation module 604 is configured to perform a conjugate point multiplication operation and an IFFT operation on the locally generated frequency-domain data and the parsed frequency-domain data to produce corresponding time-domain data. Specifically, the target cell performs the conjugate point multiplication operation on the locally generated frequency-domain data S and the parsed frequency-domain data Yᵢₙᵥ to produce R, i.e., R=S^{∗}.∗Y_{inv.} Then N_{FFT}-point IFFT operation is performed on the R to produce N_{FFT}-point time-domain data Rₜ. For each other cell, a corresponding time-domain data Rₜ is obtained.

The determination module 612 is configured to determine the interference source cell according to the time-domain data produced.

Specifically, the peak search is performed on the time-domain data Rₜ corresponding to each other cell. If the local pilot sequence and the pilot sequence of the transmitting end (other cell) are the same, then the Rₜ has an apparent peak, it is indicated that the other cell is an interference source cell, and the receiving end (the target cell) could determine the information of the interference source cell with this.

It should be noted that the device 600 for positioning interference source cell could be applied to a baseband processing unit of each cell (base station) of the TD-LTE system, and the specific data is transmitted to other cells by performing the functions of the modules 602-606. When a cell is interfered (i.e., the target cell), the device 600 for positioning interference source cell in the cell finds the interference source cell by performing the functions of the modules 608-612.

It is to be understood that the terms "comprises", "comprising", "includes", "including", "has", "having", or any other variation thereof, are intended to cover a non-exclusive inclusion, so that a process, method, article, or apparatus that comprises a list of element is not necessarily limit to only those elements but may include other elements not expressly listed or inherent to such process, method, article, or apparatus. In the absence of more restrictions, an element defined by a sentence "includes a... " does not excluded that there are other identical elements in the process, method, article or apparatus including that element.

Through the description of the above embodiments, those skilled in the art can clearly understand that the foregoing embodiment method can be implemented by means of software plus a necessary general hardware platform, and can also be implemented by hardware, but in many cases, the former is a better implementation. Based on such understanding, the technical solution of the present disclosure, which is essential or contributes to the prior art, may be embodied in the form of a software product stored in a storage medium (such as ROM/RAM, disk, optical disc), including a number of instructions for making a computer device (may be a mobile phone, a computer, a server, an air-conditioner or a network equipment, etc.) implement the methods described in the embodiments of the present disclosure.

The serial numbers of the embodiments of the present disclosure are merely for the description, and do not represent the advantages and disadvantages of the embodiments. Additionally, although logical sequences are shown in the flowcharts, the shown or described steps can be performed in sequences different from the shown sequences herein.

## Claims

1. A method for positioning an interference source cell, the method comprising:
setting (S102) an aliasing bandwidth B_{Inv} of the entire system;
taking (S104) the aliasing bandwidth B_{Inv} as a basic unit, and setting the pilot sequence of each cell in the system;
generating (S106) time-domain data according to the pilot sequence of each cell;
adding (S108) a cyclic prefix CP to the time-domain data generated for each cell to generate specific data, and transmitting the specific data;
receiving (S110) specific data generated based on a pilot sequence and transmitted by other cells;
parsing (S112) the specific data to produce corresponding frequency-domain data of each other cell at the aliasing bandwidth;
generating (S114) corresponding frequency-domain data locally according to all possible special pilot sequences in a system;
generating (S116) corresponding time-domain data according to the locally generated frequency-domain data and the parsed frequency-domain data; and
determining (S118) an interference source cell according to the time-domain data produced.

2. The method for positioning an interference source cell of claim 1, wherein, when there is a plurality of aliasing bandwidths in the system, the aliasing bandwidth having a minimum bandwidth is selected as the aliasing bandwidth B_{Inv} of the entire system.

3. The method for positioning an interference source cell of claim 1, wherein, the generating time-domain data according to the pilot sequence of each cell specifically comprises:
interpolating a value of 0 before, or after, or both before and after the pilot sequence to generate a sequence of length N_{subcarrier}, wherein the N_{subcarrier} is number of subcarriers comprised in the aliasing bandwidth Bᵢₙᵥ;
performing a positive and negative frequency exchange on the sequence of length N_{subcarrier} and interpolating a value of 0 in middle to generate N_{FFT}-point frequency-domain data; and
performing an inverse fast Fourier transform IFFT operation on the N_{FFT}-point frequency-domain data to generate N_{FFT}-point time-domain data.

4. The method for positioning an interference source cell of claim 3, wherein, when bandwidth of one cell is 2^{n ∗} B_{Inv}, 2ⁿ pilot sequences are set, 2ⁿ N_{FFT}-point time-domain data are generated correspondingly, then the generated 2ⁿ N_{FFT}-point time-domain data are merged, and then N_{cp}-point CP are added to the merged data, wherein the n is a non-negative integer.

5. The method for positioning an interference source cell of claim 4, wherein, the specific data is (N_{cp} + 2^{n ∗} N_{FFT})-point data, the parsing the specific data to produce corresponding frequency-domain data of each other cell at an aliasing bandwidth specifically comprises:
removing the N_{cp}-point CP from the specific data;
obtaining the corresponding N_{FFT}-point time-domain data at the aliasing bandwidth; and
performing a fast Fourier transform FFT operation on the N_{FFT}-point time-domain data to produce N_{FFT}-point frequency-domain data Yᵢₙᵥ.

6. The method for positioning an interference source cell of claim 1, wherein, the generating corresponding time-domain data according to the locally generated frequency-domain data and the parsed frequency-domain data comprises:
performing conjugate point multiplication on the locally generated frequency-domain data and the parsed frequency-domain data to produce R; and
performing IFFT operation on the R to produce N_{FFT}-point time-domain data Rₜ.

7. The method for positioning an interference source cell of claim 6, wherein, the determining an interference source cell according to the time-domain data produced specifically comprises:
performing a peak search on the time-domain data Rₜ corresponding to each other cell, and if the Rₜ has an apparent peak, the corresponding other cell is the interference source cell.

8. A device for positioning an interference source cell, applied to a baseband processing unit of a base station, wherein the device comprises:
a setting module (602), configured to set an aliasing bandwidth B_{Inv} of the entire system, and take the aliasing bandwidth B_{Inv} as a basic unit, and set the pilot sequence of each cell in the system;
a generation module (604) configured to generate time-domain data according to the pilot sequence of each cell, and add a cyclic prefix CP to the time-domain data generated for each cell to generate specific data;
a transmitting module (606), configured to transmit the generated specific data to other cell;
a receiving module (608), configured to receive specific data generated based on a pilot sequence and transmitted by other cells;
a parsing module (610), configured to parse the specific data to produce corresponding frequency-domain data of each other cell at an aliasing bandwidth;
the generation module (604), is further configured to generate corresponding frequency-domain data locally according to all possible special pilot sequences in a system, and generate corresponding time-domain data according to the locally generated frequency-domain data and the parsed frequency-domain data; and
a determination module (612), configured to determine an interference source cell according to the time-domain data produced.

9. The device for positioning an interference source cell of claim 8, wherein, the generation module (604) configured to generate time-domain data according to the pilot sequence of each cell is configured to:
interpolate a value of 0 before, or after, or both before and after the pilot sequence to generate a sequence of length N_{subcarrier}, wherein the N_{subcarrier} is number of subcarriers comprised in the aliasing bandwidth Bᵢₙᵥ;
perform a positive and negative frequency exchange on the sequence of length N_{subcarrier} and interpolating a value of 0 in middle to generate NFFT-point frequency-domain data; and
perform an inverse fast Fourier transform IFFT operation on the N_{FFT}-point frequency-domain data to generate N_{FFT}-point time-domain data.

10. The device for positioning an interference source cell of claim 8, wherein, the generation module (604) configured to generate corresponding time-domain data according to the locally generated frequency-domain data and the parsed frequency-domain data is configured to:
perform a conjugate point multiplication on the locally generated frequency-domain data and the parsed frequency-domain data to produce R; and
perform an IFFT operation on the R to produce N_{FFT}-point time-domain data Rₜ.

11. A base station, comprising a baseband processing unit, wherein the baseband processing unit is configured to perform the method for positioning an interference source cell according to any one of claims 1-7.

## Patentansprüche

1. Verfahren zum Positionieren einer Interferenzquellenzelle, wobei das Verfahren umfasst:
Festlegen (S102) einer Aliasing-Bandbreite B_{Inv} des gesamten Systems;
Nehmen (S104) der Aliasing-Bandbreite B_{Inv}, als eine Basiseinheit und Festlegen der Pilotsequenz jeder Zelle in dem System;
Erzeugen (S106) von Zeit-Domain-Daten gemäß der Pilotsequenz jeder Zelle;
Hinzufügen (S108) eines zyklischen Präfixes CP zu den Zeit-Domain-Daten, welche für jede Zelle erzeugt worden sind, um spezifische Daten zu erzeugen, und Übertragen der spezifischen Daten;
Empfangen (S110) spezifischer Daten, welche auf Grundlage einer Pilotsequenz erzeugt und durch andere Zellen übertragen worden sind;
Parsen (S112) der spezifischen Daten, um entsprechende Frequenz-Domain-Daten jeder anderen Zelle auf der Aliasing-Bandbreite zu produzieren;
Erzeugen (S114) entsprechender Frequenz-Domain-Daten lokal gemäß allen möglichen speziellen Pilotsequenzen in einem System;
Erzeugen (S116) entsprechender Zeit-Domain-Daten gemäß den lokal erzeugten Frequenz-Domain-Daten und den geparsten Frequenz-Domain-Daten; und
Bestimmen (S118) einer Interferenzquellenzelle gemäß den produzierten Zeit-Domain-Daten.

2. Verfahren zum Positionieren einer Interferenzquellenzelle nach Anspruch 1, wobei, wenn eine Mehrzahl von Aliasing-Bandbreiten in dem System vorhanden ist, die Aliasing-Bandbreite, welche eine minimale Bandbreite aufweist, als die Aliasing-Bandbreite B_{Inv} des gesamten Systems ausgewählt wird.

3. Verfahren zum Positionieren einer Interferenzquellenzelle nach Anspruch 1, wobei, das Erzeugen von Zeit-Domain-Daten gemäß der Pilotsequenz jeder Zelle insbesondere umfasst:
Interpolieren eines Wertes von 0 vor oder nach oder sowohl vor als auch nach der Pilotsequenz, um eine Sequenz einer Länge N_{subcarrier} zu erzeugen, wobei die N_{subcarrier} eine Anzahl von Subcarriern ist, welche in der Aliasing-Bandbreite B_{Inv} umfasst sind;
Durchführen eines positiven und eines negativen Frequenzaustauschs an der Sequenz der Länge N_{subcarrier} und Interpolieren eines Wertes von 0 in der Mitte, um N_{FFT}-Punkt-Frequenz-Domain-Daten zu erzeugen; und
Durchführen einer inversen schnellen Fourier-Transformation-IFFT-Operation an den N_{FFT}-Punkt-Frequenz-Domain-Daten, um N_{FFT}-Punkt-Zeit-Domain-Daten zu erzeugen.

4. Verfahren zum Positionieren einer Interferenzquellenzelle nach Anspruch 3, wobei wenn eine Bandbreite einer Zelle 2ⁿ * B_{Inv} ist, 2ⁿ Pilotsequenzen festgelegt werden, 2ⁿ N_{FFT}-Punkt-Zeit-Domain-Daten entsprechend erzeugt werden, dann die erzeugten 2ⁿ N_{FFT}-Punkt-Zeit-Domain-Daten zusammengeführt werden und dann N_{cp-}Punkt CP den zusammengeführten Daten hinzugefügt werden, wobei das n eine nicht-negative ganze Zahl ist.

5. Verfahren zum Positionieren einer Interferenzquellenzelle nach Anspruch 4, wobei die spezifischen Daten (N_{cp} + 2ⁿ_{*}N_{FFT})-Punktdaten sind, das Parsen der spezifischen Daten, um entsprechende Frequenz-Domain-Daten jeder anderen Zelle auf einer Aliasing-Bandbreite zu erzeugen, insbesondere umfasst:
Entfernen des N_{cp-}Punkt CP von den spezifischen Daten;
Erhalten der entsprechenden N_{FFT}-Punkt-Zeit-Domain-Daten auf der Aliasing-Bandbreite; und
Durchführen einer schnellen Fourier-Transformation-FFT-Operation an den N_{FFT}-Punkt-Zeit-Domain-Daten, um N_{FFT}-Punkt-Frequenz-Domain-Daten Yᵢₙᵥ zu erzeugen.

6. Verfahren zum Positionieren einer Interferenzquellenzelle nach Anspruch 1, wobei das Erzeugen entsprechender Zeit-Domain-Daten gemäß den lokal erzeugten Frequenz-Domain-Daten und den geparsten Frequenz-Domain-Daten umfasst:
Durchführen einer konjugierten Punkt-Multiplikation an den lokal erzeugten Frequenz-Domain-Daten und den geparstem Frequenz-Domain-Daten, um R zu produzieren; und
Durchführen einer IFFT-Operation an R, um N_{FFT}-Punkt-Zeit-Domain-Daten Rₜ zu produzieren.

7. Verfahren zum Positionieren einer Interferenzquellenzelle nach Anspruch 6, wobei das Bestimmen einer Interferenzquellenzelle gemäß der produzierten Zeit-Domain-Daten insbesondere umfasst:
Durchführen einer Spitzenwertsuche an den Zeit-Domain-Daten Rₜ entsprechend jeder anderen Zelle; und wenn die Rₜ einen ersichtlichen Spitzenwert aufweisen, ist die entsprechende andere Zelle die Interferenzquellenzelle.

8. Vorrichtung zum Positionieren einer Interferenzquellenzelle, welche auf eine Basisband-Verarbeitungseinheit einer Basisstation angewendet ist, wobei die Vorrichtung umfasst:
ein Festlegungsmodul (602), welches dazu eingerichtet ist, eine Aliasing-Bandbreite B_{Inv} des gesamten Systems festzulegen und die Aliasing-Bandbreite B_{Inv} als eine Basiseinheit zu nehmen und die Pilotsequenz jeder Zelle in dem System festzulegen;
ein Erzeugungsmodul (604), welches dazu eingerichtet ist, Zeit-Domain-Daten gemäß der Pilotsequenz jeder Zelle zu erzeugen und einen zyklischen Präfix CP zu den Zeit-Domain-Daten für jede Zelle hinzuzufügen, um spezifische Daten zu erzeugen,
ein Übertragungsmodul (606), welches dazu eingerichtet ist, die erzeugten spezifischen Daten an eine andere Zelle zu übertragen;
ein Empfangsmodul (608), welches dazu eingerichtet ist, spezifische Daten zu empfangen, welche auf Grundlage einer Pilotsequenz erzeugt und durch andere Zellen übertragen worden sind;
ein Parsing-Modul (610), welches dazu eingerichtet ist, die spezifischen Daten zu parsen, um entsprechende Frequenz-Domain-Daten jeder anderen Zelle auf einer Aliasing-Bandbreite zu produzieren;
wobei das Erzeugungsmodul (604) ferner dazu eingerichtet ist, entsprechende Frequenz-Domain-Daten lokal gemäß allen möglichen speziellen Pilotsequenzen in einem System zu erzeugen, und entsprechende Zeit-Domain-Daten gemäß den lokal erzeugten Frequenz-Domain-Daten und den geparsten Frequenz-Domain-Daten zu erzeugen; und
ein Bestimmungsmodul (612), welches dazu eingerichtet ist, eine Interferenzquellenzelle gemäß den produzierten Zeit-Domain-Daten zu bestimmen.

9. Vorrichtung zum Positionieren einer Interferenzquellenzelle nach Anspruch 8, wobei das Erzeugungsmodul (604), welches dazu eingerichtet ist, Zeit-Domain-Daten gemäß der Pilotsequenz jeder Zelle zu erzeugen, eingerichtet ist zum:
Interpolieren eines Wertes von 0 vor oder nach oder sowohl vor als auch nach der Pilotsequenz, um eine Sequenz einer Länge N_{subcarrier} zu erzeugen, wobei die N_{subcarrier} eine Anzahl von Subcarriern ist, welche in der Aliasing-Bandbreite B_{Inv} umfasst sind;
Durchführen eines positiven und eines negativen Frequenzaustauschs an der Sequenz der Länge N_{subcarrier} und Interpolieren eines Wertes von 0 in der Mitte, um N_{FFT}-Punkt-Frequenz-Domain-Daten zu erzeugen; und
Durchführen einer inversen schnellen Fourier-Transformation-IFFT-Operation an den N_{FFT}-Punkt-Frequenz-Domain-Daten, um N_{FFT}-Punkt-Zeit-Domain-Daten zu erzeugen.

10. Vorrichtung zum Positionieren einer Interferenzquellenzelle nach Anspruch 8, wobei das Erzeugungsmodul (604), welches dazu eingerichtet ist, entsprechende Zeit-Domain-Daten gemäß den lokal erzeugten Frequenz-Domain-Daten und den geparsten Frequenz-Domain-Daten zu erzeugen, eingerichtet ist zum:
Durchführen einer konjugierten Punkt-Multiplikation an den lokal erzeugten Frequenz-Domain-Daten und den geparsten Frequenz-Domain-Daten, um R zu produzieren; und
Durchführen einer IFFT-Operation an R, um N_{FFT}-Punkt-Zeit-Domain-Daten Rₜ zu produzieren.

11. Basisstation, umfassend eine Basisband-Verarbeitungseinheit, wobei die Basisband-Verarbeitungseinheit dazu eingerichtet ist, das Verfahren zum Positionieren einer Interferenzquellenzelle nach einem der Ansprüche 1-7 durchzuführen.

## Revendications

1. Procédé de positionnement d'une cellule source d'interférence, le procédé comprenant :
le paramétrage (S102) d'une bande passante de repliement B_{Inv} de l'ensemble du système ;
la considération (S104) de la bande passante de repliement B_{Inv} comme une unité de base, et le paramétrage de la séquence pilote de chaque cellule dans le système ;
la génération (S106) de données de domaine temporel selon la séquence pilote de chaque cellule ;
l'ajout (S108) d'un préfixe cyclique CP aux données de domaine temporel générées pour chaque cellule pour générer des données spécifiques, et l'émission des données spécifiques ;
la réception (S110) de données spécifiques générées sur la base d'une séquence pilote et émises par d'autres cellules ;
l'analyse (S112) des données spécifiques pour produire des données de domaine fréquentiel correspondantes de chaque autre cellule au niveau de la bande passante de repliement ;
la génération (S114) de données de domaine fréquentiel correspondantes localement selon toutes les séquences pilotes spéciales possibles dans un système ;
la génération (S116) de données de domaine temporel correspondantes selon les données de domaine fréquentiel générées localement et les données de domaine fréquentiel analysées ; et
la détermination (S118) d'une cellule source d'interférence selon les données de domaine temporel produites.

2. Procédé de positionnement d'une cellule source d'interférence selon la revendication 1, dans lequel, lorsqu'il existe une pluralité de bandes passantes de repliement dans le système, la bande passante de repliement ayant une bande passante minimale est sélectionnée comme étant la bande passante de repliement B_{Inv} de l'ensemble du système.

3. Procédé de positionnement d'une cellule source d'interférence selon la revendication 1, dans lequel la génération de données de domaine temporel selon la séquence pilote de chaque cellule comprend spécifiquement :
l'interpolation d'une valeur de 0 avant, ou après, ou à la fois avant et après la séquence pilote pour générer une séquence de longueur Nₛₒᵤₛ₋ₚₒᵣₜₑᵤₛₑ, dans lequel le Nₛₒᵤₛ₋ₚₒᵣₜₑᵤₛₑ est un nombre de sous-porteuses comprises dans la bande passante de repliement B_{Inv}, ;
la réalisation d'un échange de fréquence positive et négative sur la séquence de longueur Nₛₒᵤₛ₋ₚₒᵣₜₑᵤₛₑ et l'interpolation d'une valeur de 0 au milieu pour générer des données de domaine fréquentiel sur N_{FFT} points ; et
la réalisation d'une opération de transformée de Fourier inverse rapide IFFT sur les données de domaine fréquentiel sur N_{FFT} points pour générer des données de domaine temporel sur N_{FFT} points.

4. Procédé de positionnement d'une cellule source d'interférence selon la revendication 3, dans lequel, lorsque la bande passante d'une cellule est 2^{n ∗} B_{Inv}, 2ⁿ séquences pilotes sont paramétrées, 2ⁿ données de domaine temporel sur N_{FFT} points sont générées de manière correspondante, puis les 2ⁿ données de domaine temporel sur N_{FFT} points générées sont fusionnées, et ensuite des CP sur N_{cp} points sont ajoutés aux données fusionnées, dans lequel le n est un entier non-négatif.

5. Procédé de positionnement d'une cellule source d'interférence selon la revendication 4, dans lequel les données spécifiques sont des données sur (N_{cp} + 2^{n ∗} N_{FFT}) points, l'analyse des données spécifiques pour produire des données de domaine fréquentiel correspondantes de chaque autre cellule au niveau d'une bande passante de repliement comprend spécifiquement :
la suppression des CP sur N_{cp} points des données spécifiques ;
l'obtention des données de domaine temporel sur N_{FFT} points correspondantes au niveau de la bande passante de repliement ; et
la réalisation d'une opération de transformée de Fourier rapide FFT sur les données de domaine temporel sur N_{FFT} points pour produire des données de domaine fréquentiel Yᵢₙᵥ sur N_{FFT} points.

6. Procédé de positionnement d'une cellule source d'interférence selon la revendication 1, dans lequel la génération de données de domaine temporel correspondantes selon les données de domaine fréquentiel générées localement et les données de domaine fréquentiel analysées comprend :
la réalisation d'une multiplication de points conjugués sur les données de domaine fréquentiel générées localement et les données de domaine fréquentiel analysées pour produire R ; et
la réalisation d'une opération IFFT sur le R pour produire des données de domaine temporel Rₜ sur N_{FFT} points.

7. Procédé de positionnement d'une cellule source d'interférence selon la revendication 6, dans lequel la détermination d'une cellule source d'interférence selon les données de domaine temporel produites comprend spécifiquement :
la réalisation d'une recherche de pic sur les données de domaine temporel Rₜ correspondant à chaque autre cellule, et si le Rₜ a un pic apparent, l'autre cellule correspondante est la cellule source d'interférence.

8. Dispositif de positionnement d'une cellule source d'interférence, appliqué à une unité de traitement de bande de base d'une station de base, dans lequel le dispositif comprend :
un module de paramétrage (602), configuré pour paramétrer une bande passante de repliement B_{Inv} de l'ensemble du système, et considérer la bande passante de repliement B_{Inv} comme une unité de base, et paramétrer la séquence pilote de chaque cellule dans le système ;
un module de génération (604) configuré pour générer des données de domaine temporel selon la séquence pilote de chaque cellule, et ajouter un préfixe cyclique CP aux données de domaine temporel générées pour chaque cellule pour générer des données spécifiques ;
un module d'émission (606), configuré pour émettre les données spécifiques générées à destination d'une autre cellule ;
un module de réception (608), configuré pour recevoir des données spécifiques générées sur la base d'une séquence pilote et émises par d'autres cellules ;
un module d'analyse (610), configuré pour analyser les données spécifiques pour produire des données de domaine fréquentiel correspondantes de chaque autre cellule au niveau d'une bande passante de repliement ;
le module de génération (604) est en outre configuré pour générer des données de domaine fréquentiel correspondantes localement selon toutes les séquences pilotes spéciales possibles dans un système, et générer des données de domaine temporel correspondantes selon les données de domaine fréquentiel générées localement et les données de domaine fréquentiel analysées ; et
un module de détermination (612), configuré pour déterminer une cellule source d'interférence selon les données de domaine temporel produites.

9. Dispositif de positionnement d'une cellule source d'interférence selon la revendication 8, dans lequel le module de génération (604) configuré pour générer des données de domaine temporel selon la séquence pilote de chaque cellule est configuré pour :
interpoler une valeur de 0 avant, ou après, ou à la fois avant et après la séquence pilote pour générer une séquence de longueur Nₛₒᵤₛ₋porteuse, dans lequel le Nₛₒᵤₛ₋ₚₒᵣₜₑᵤₛₑ est un nombre de sous-porteuses comprises dans la bande passante de repliement B_{Inv} ;
réaliser un échange de fréquence positive et négative sur la séquence de longueur Nₛₒᵤₛ₋ₚₒᵣₜₑᵤₛₑ et interpoler une valeur de 0 au milieu pour générer des données de domaine fréquentiel sur N_{FFT} points ; et
réaliser une opération de transformée de Fourier inverse rapide I_{FFT} sur les données de domaine fréquentiel sur N_{FFT} points pour générer des données de domaine temporel sur N_{FFT} points.

10. Dispositif de positionnement d'une cellule source d'interférence selon la revendication 8, dans lequel le module de génération (604) configuré pour générer des données de domaine temporel correspondantes selon les données de domaine fréquentiel générées localement et les données de domaine fréquentiel analysées est configuré pour :
réaliser une multiplication de points conjugués sur les données de domaine fréquentiel générées localement et les données de domaine fréquentiel analysées pour produire R ; et
réaliser une opération I_{FFT} sur le R pour produire des données de domaine temporel Rt sur NFFT points.

11. Station de base, comprenant une unité de traitement de bande de base, dans laquelle l'unité de traitement de bande de base est configurée pour réaliser le procédé de positionnement d'une cellule source d'interférence selon l'une quelconque des revendications 1 à 7.
